# EUROPEAN PATENT APPLICATION

(11) **EP 1 184 228 A2**
(43) Date of publication of application: **06.03.2002**
(21) Application number: 01120325.4
(22) Date of filing: 24.08.2001
(51) Int. Cl.: B60R 11/02, G09G 3/20

(54) **Display device with storage part and writing part**

(30) Priority: 28.08.2000 JP 2000257441
(71) Applicant: Pioneer Corporation, Meguro-ku, Tokyo (JP); Pioneer System Technologies Corporation, Tsurugashima-shi, Saitama 350-2288 (JP)
(72) Inventor: Yamamoto, Mitsuhiro, Tokyo (JP); Toyoda, Kunio, Tokyo (JP); Nagahata, Ikuo, Tokyo (JP); Suenaga, Shoji, c/o Pioneer Corp. Kawagoe Works, Kawagoe-shi, Saitama (JP); Mori, Shuichi, Tsurugashima-shi, Saitama 350-2288 (JP)
(74) Representative: Goddar, Heinz J., Dr.

(57) **Abstract**

A display apparatus configured to add variations to displayed contents to prevent the user from getting bored and sufficiently utilize the characteristics of a display panel such as an organic EL display panel which excels in displaying a moving image. The display apparatus is suitable for use in an electronic equipment, and comprises a display panel for displaying images, a storage unit contained in the electronic equipment for storing display data representative of display images for display on the display panel, and a writing unit for writing display data into the storage device from the outside. In one embodiment, a device body is provided with a rewritable memory such as a flash memory to provide an environment in which previously provided data can be captured through the Internet, or images created by the user can be uniquely captured.

## Description

### BACKGROUND OF THE INVENTION

### 1. Field of the Invention

The present invention relates to a display apparatus for use in an electronic equipment which comprises a display panel for displaying an image, and more particularly, to a display apparatus suitable for use in a vehicle-mounted electronic equipment.

### 2. Description of the Related Art

A device having a display panel such as a vehicle-mounted audio device displays on this display panel the type of sound source (radio, cassette, CD, MD, changer, and so on), and information related to manipulations such as a selected frequency, track and so on, and a graphic equalizer displays a graph and pattern synchronized to reproduced frequencies.

In recent years, organic EL panels have been brought into practical use for display panels of the foregoing devices. Some display panels have the ability to display previously prepared still images and moving images in part during a play, in addition to the above-mentioned information.

Disadvantageously, however, a vehicle-mounted audio device having therein the display apparatus comprising the above-described organic EL panel is capable of displaying previously provided image data only. Thus, such an audio device fails to sufficiently utilize the characteristics of the organic EL panel, which excels in displaying moving images. Consequently, the user, though interested at the beginning, gradually becomes bored due to lack of variations in display, and comes to neglect the organic EL panel.

With the outspread of the Internet, some providers have begun providing delivery of programs such as music and video in addition to the provision of simple information, permitting the user to acquire desired music or images only by installing a web browser in a personal computer possessed by the user.

### OBJECT AND SUMMARY OF THE INVENTION

The present invention has been made in view of the above-mentioned disadvantage and background, and an object of the present invention is to provide a display apparatus which is capable of varying displayed contents to prevent the user from getting bored, and of sufficiently utilizing the characteristics of an organic EL display panel.

To achieve the above object, a display apparatus according to the present invention is a display apparatus for displaying an image on a display panel which is provided to display a predetermined image on an electronic equipment. The display apparatus includes a storage part contained in the electronic equipment for storing display data representative of display images for displaying on the display panel, and a writing part for writing the display data into the storage part from the outside.

In the display apparatus according to an aspect of the present invention, the electronic equipment includes a device body portion, and a display panel portion including a display panel. Also, in the display apparatus of a further aspect of the present invention, the storage part is arranged in the display panel portion which is configured to be removable from the device body section of the electronic equipment.

Also in the display apparatus according to a further aspect of the present invention, the storage part includes a flash memory.

Furthermore, in the display apparatus according to a further aspect of the present invention, the data writing part writes previously provided display data into the storage unit. Further, in the display apparatus according to a further aspect of the present invention, the previously provided display data is accumulated in a predetermined site, such that the display data accumulated in the site is written into the storage part through a communication network.

Furthermore, in the display apparatus according to a further aspect of the present invention, the communication network is the Internet through which the display data accumulated in the site being downloaded into the storage part. Further, the data writing part writes arbitrary display data into the storage part.

Furthermore, in the display apparatus according to a further aspect of the present invention, the data writing part captures externally existing arbitrary display data and writes the same into the display part. Further, in the display apparatus according to a further aspect of the present invention, the arbitrary display data is an image taken by a user using an imager device.

Furthermore, in the display apparatus according to a further aspect of the present invention, software for capturing the arbitrary display data and writing the same into the display part is accumulated in a predetermined site, and the data writing part downloads the software through the Internet.

Furthermore, in the display apparatus according to a further the present invention, the display data represents a moving image. Additionally, in the display apparatus of the present invention, the display data represents a still image. In addition, in the display apparatus according to a further aspect of the present invention, the electronic equipment is a vehicle-mounted electronic equipment.

With the features described above, the electronic equipment is equipped with a rewritable memory to provide an environment in which previously created image data is captured through the Internet or images created by the user can be uniquely capture, thereby making it possible to provide a display apparatus which can add variations to displayed contents to prevent the user from getting bored, and sufficiently utilize the characteristics inherent to the organic EL display panel.

### BRIEF DESCRIPTION OF THE DRAWINGS

Fig. 1 is a diagram for explaining features for realizing a display apparatus according to the present invention;
Fig. 2 is a diagram for explaining an outline of a fixed data display mode in the present invention;
Fig. 3 is a diagram for explaining an outline of a customize mode in the present invention;
Fig. 4 is a block diagram illustrating the internal configuration of a display apparatus according to the present invention;
Fig. 5 is a block diagram showing the structure of the driver control circuit 15 shown in Fig. 4;
Fig. 6 shows a view of an example of the arrangement of the display apparatus having an internal structure shown in Fig. 4; and
Fig. 7 shows a view of another example of the arrangement of the display apparatus.

### DETAILED DESCRIPTION OF THE EMBODIMENTS

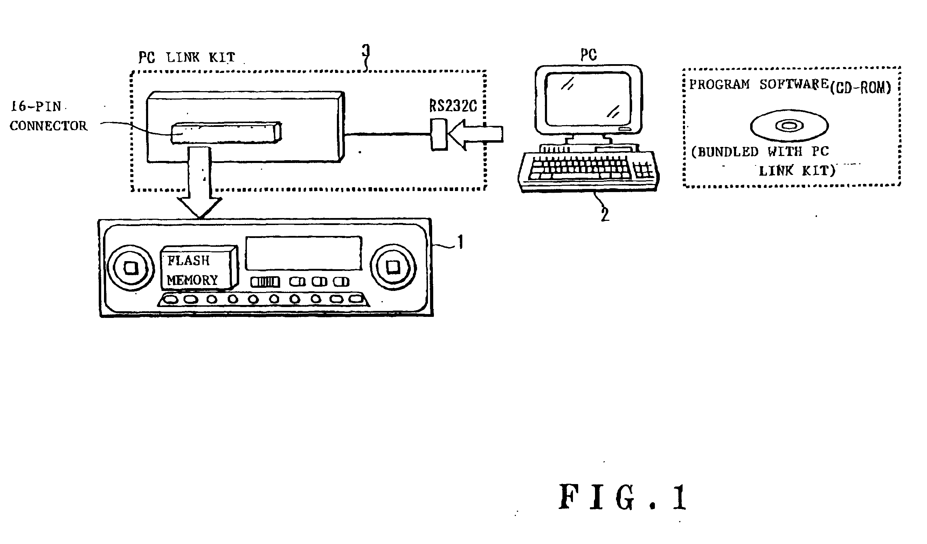

Fig. 1 is a diagram for explaining features for realizing a display apparatus according to the present invention.

In Fig. 1, a vehicle-mounted electronic equipment 1, here a vehicle-mounted audio device, comprises a device body and a front panel. The vehicle-mounted electronic equipment 1 contains a flash memory, in addition to ROM, for storing and displaying images, as described later.

A personal computer (PC) 2, capable of connecting to the Internet, is assumed to be a Windows-based personal computer (which has been preinstalled with Windows 98, sold on an OEM basis from Microsoft Corporation of the United States). The personal computer 2 is connected to the front panel of the vehicle-mounted audio device 1 through a PC link kit 3.

The PC link kit 3 is an interface unit used for capturing image data generated by the personal computer 2 into the vehicle-mounted audio device 1, and is connected to the personal computer 2 through an RS232C interface, and to the vehicle-mounted audio device 1 through a 16-pin connector. The personal computer 2 can capture still image or moving image data taken by the user through the Internet, not shown, or through image capturing software bundled to the PC link kit 3.

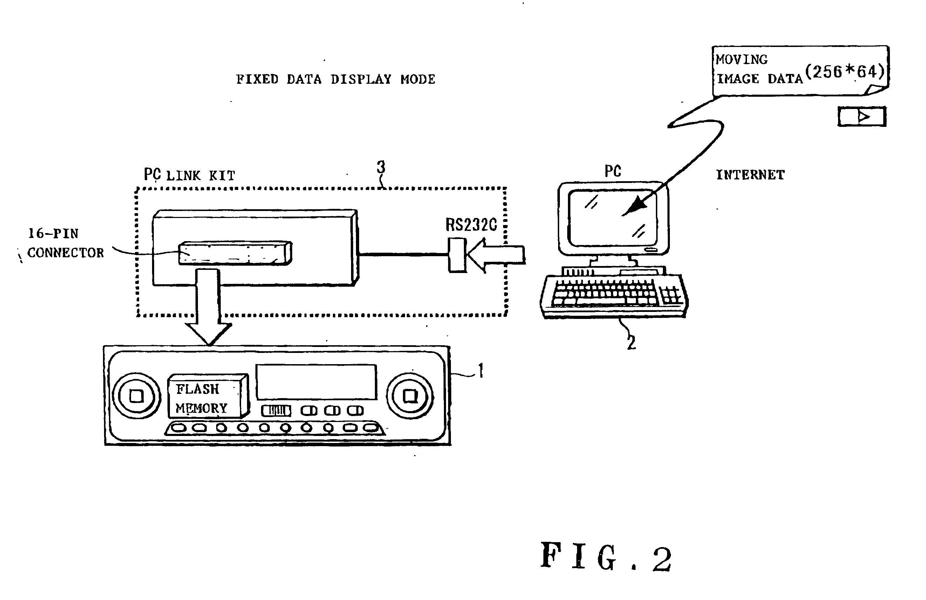

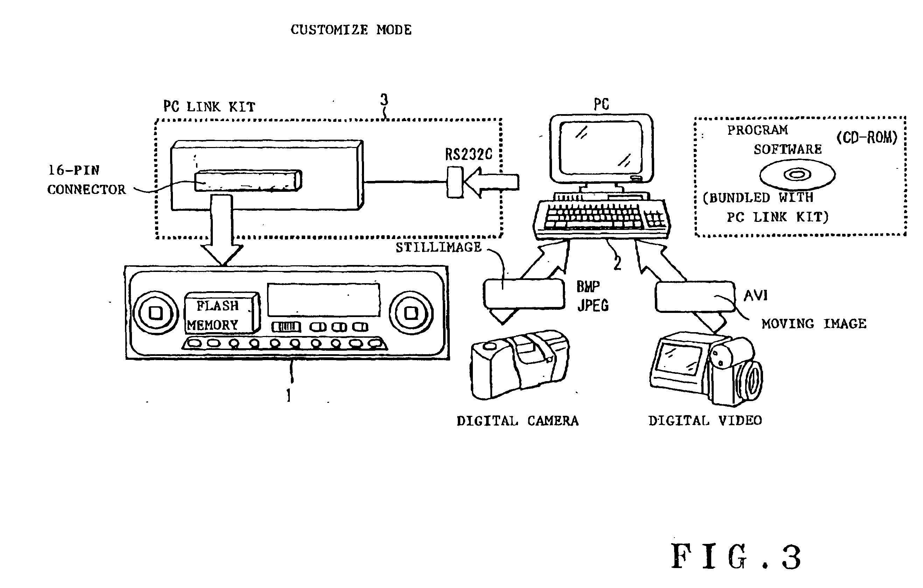

In the configuration described above, the present invention provides two operation modes for the flash memory contained in the vehicle-mounted audio device 1 in accordance with manners of writing image data. One is a fixed data display mode, and the other is a customize mode. Fig. 2 shows a feature for realizing the fixed data display mode, and Fig. 3 shows a feature for realizing the customize mode. In the figures, blocks designated the same reference numerals as Fig. 1 are identical to those shown in Fig. 1.

Fig. 2 shows how image data delivered using the Internet is captured, as the fixed data display mode. Here, the PC link kit 3 is used to connect the personal computer 2 to the front panel of the vehicle-mounted audio device 1 to download moving image data of 256 x 64 dots delivered through the Internet.

Fig. 3 shows how the user captures and edits image data, as the customize mode. Here, the user first captures moving image or still image data, and installs software for processing the data in the personal computer 2. Then, the user compresses and captures a still image or a moving image taken by himself using a digital camera or a digital video camera, connects the personal computer 2 to the front panel through the PC link kit 3, and processes the captured image by the user himself using the software to create a desired moving image or still image.

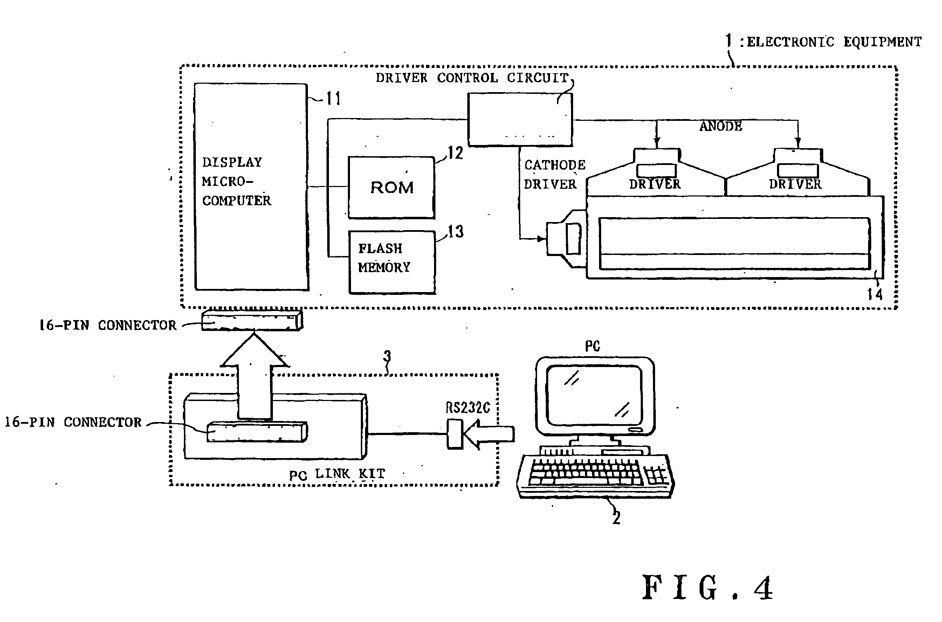

Fig. 4 is a block diagram illustrating an embodiment of the display apparatus according to the present invention, which herein illustrates the internal configuration of the front panel of the vehicle-mounted audio device.

The display device of the present invention comprises a display microcomputer 11, a ROM 12, a flash memory 13, an organic EL display panel 14, and a driver control circuit 15.

The ROM 12 has written therein fixed image data as before, while the flash memory 13 is loaded with moving image or still image data in the fixed display data mode or the customize mode provided by the present invention.

The organic EL display panel 14 has anode and cathode electrodes associated with drivers which are driven by the driver control circuit 15 to display image data written in the ROM 12 or the flash memory 13 on the panel 14. Image data written in the ROM 12 or the flash memory 13 is read by the display microcomputer 11 in synchronism with a display timing, and displayed on the organic EL display panel 14 under driving control of the driver control circuit 15.

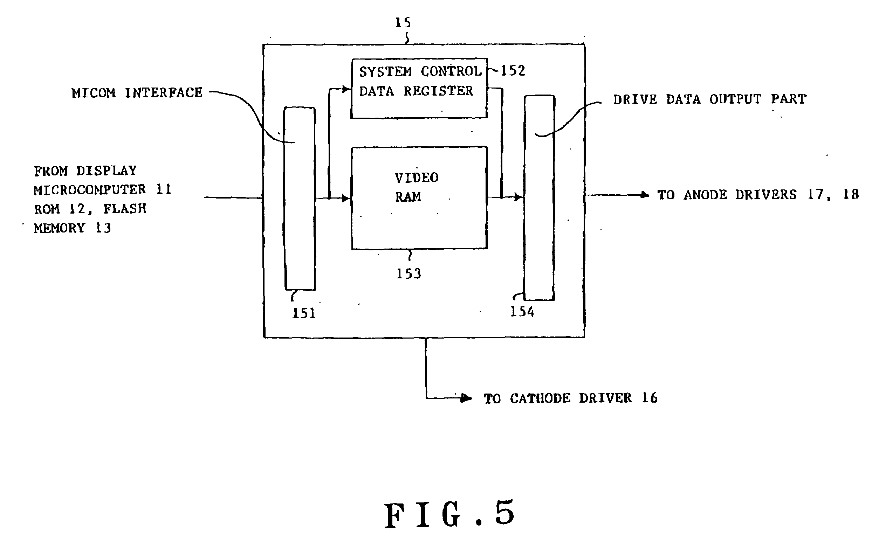

Fig. 5 shows an example of the structure of the driver control circuit 15 shown in Fig. 4. In Fig. 5, the driver control crcuit 15 is comprised of a microcomputer interface 151, a system control data register, a video RAM 153 and a drive data output part to which the cathode and anode drivers 16, 17 and 18 are connected. The video RAM 153 is constituted by an SRAM (Static RAM) for storing display data, and various control data is held in the system control data register 152. Addresses of a predetermined range are allocated to Each of these elements 152 and 153, so that those addresses can be arbitrarily accessed from the display microcomputer 11 for the purpose of performing such processes of drawing of a picture, or other operations of the driver control circuit 15.

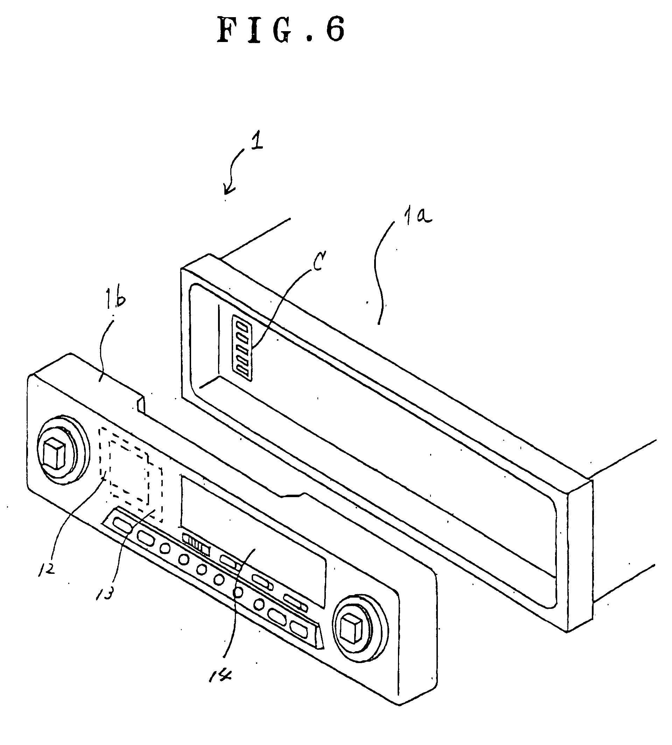

As shown in Fig. 6, the vehicle-mounted audio equipment 1 is, for example, comprised of a device body 1a and a front panel 1b which is removably attached to the device body 1a. The front panel 1b contains the elements shown in Fig. 4, that is, the organic EL display panel 14, and a storage device including the ROM 12 and the storage part which is constituted by a flash memory 13, and so on. In Fig. 6, the ROM 12 and the flash memory 13 are indicated by broken lines since these elements are contained in the front panel 1b. The reference sign C in Fig. 6 represents a connector which receives a connector element (not shown) provided on the rear face of the front panel 1b. The front panel 1b is further provided with a 16-pin connector shown in Fig. 4. Display data of images displayed on the display panel is stored in the ROM 12 and the flash memory 13. The ROM 12 is mounted on the front panel and cannot be removed therefrom. It is therefore necessary for the manufacturer to previously write background images and icons as still images or moving image data into the ROM 12 before the vehicle-mounted audio device is shipped.

The flash memory 13, on the other hand, is rewritable but not removable from the front panel. However, display data can be written into the flash memory 13 as well.

In the following, the operation of the embodiment of the present invention shown in Figs. 1 through 5 will be described in detail.

The operation involved in writing image data into the flash memory 13 will first be described. Initially, the front panel is removed from the device body. Then, the personal computer 2 is connected to the PC link kit 3, which serves as an interface, through an RS232C interface, and the front panel is connected to the PC link kit 3 through a 16-pin connector.

As described above, two modes are available for writing image data: the fixed data display mode and customize mode.

The fixed data display mode will be first described. A site, which provides a database or files that accumulate display data and a WWW server, is accessed from the personal computer 2 through the Internet to download display data in the database or files. The downloaded data is written into the flash memory 13 through the PC link kit 3. A site operation company accumulates a plurality of display data, from which the user can select desired display data through the personal computer 2. Also, this display data is updated, and here, this is assumed to be moving image data of 256x64 dots, by way of example.

In this process, the microcomputer 11 shown in Fig. 4 performs processes to retrieve the motion picture data downloaded in the personal computer 2 consecutively via the PC link kit 3, and to write it into the flash memory 13. The data transfer to the PC link kit 3 takes the form of a serial data transfer. A serial to parallel conversion is performed in the PC link kit 3, then the motion picture data is transferred to the register of the display microcomputer 11 through the 16 pin connector, and finally written into the flash memory 13. In the flash memory 13, the data is consecutively written into its unoccupied memory region. It is also possible to employ an arrangement that the picture data from the PC link kit 3 is written over previous data if picture data is already written in the flash memory 13 and no vacant memory region exists.

Next, the customize mode will be described. First, software for capturing display data is installed in the personal computer 2. The user inputs images taken by a digital camera or a digital video camera, images read by a scanner, desired images captured through the Internet to the personal computer 2, and creates moving image or still image data for the display panel using the foregoing software.

The display data is, for example, a still image representing a background image, in which case display items such as the name of a currently selected source, a reproduced track number in the case of CD, reproducing time, source switching setting, equalizer setting, and surround setting are displayed as superimposed or not superimposed (displayed on a fixed background image). Whether to superimpose or not each of the display items can be selected from a plurality of patterns. Also, data such as characters and figures (including hand-written data as well) may be overlapped on a captured image. Further, separate images can be displayed on a single screen which is divided, for example, into two thirds of the screen on the left side in which a moving image is displayed, and one third of the screen on the right side in which a still image is displayed. In addition, a plurality of patterns may be provided for positions of the respective display items and display forms such that the user can select desired one therefrom.

In the customize mode, the display microcomputer 11 performs an operation similar to that in the fixed data display mode, so that the picture data composed in the personal computer 2 is consecutively retrieved via the PC link kit 3, and written in the flash memory 13.

It is needless to mention that any suitable interface, such as USB (Universal Serial Bus), may be used in place of the RS232C interface between the PC link kit 3 and the personal computer 2.

While the foregoing embodiment of the present invention has shown an example in which the flash memory is contained in the electronic equipment, smart media may be removably attached to the electronic equipment. To write display data, the smart media may be mounted in a peripheral device of the personal computer including an interface or an adapter, thereby increasing the portability of the storage part.

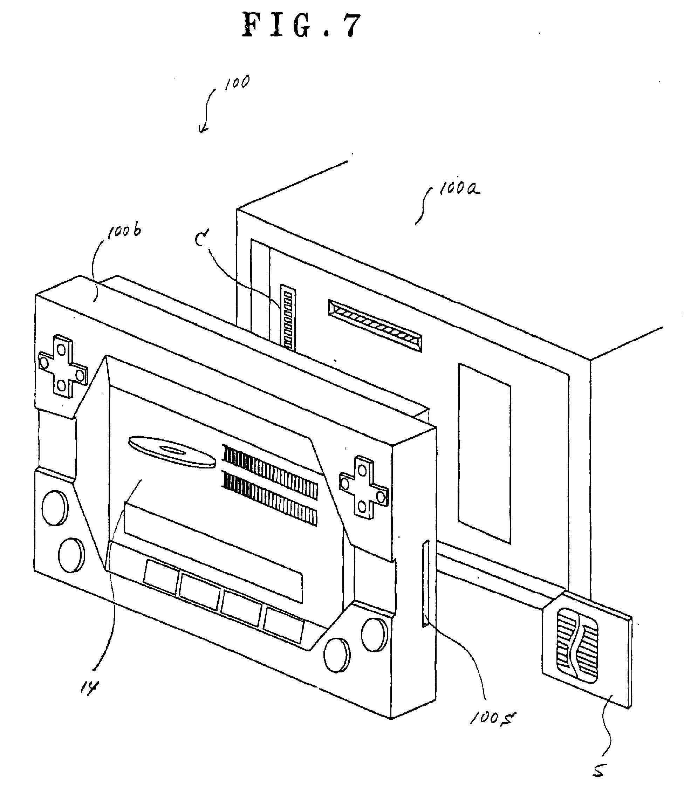

Fig. 7 shows a vehicle mounted audio equipment as an example of the equipment constructed in the way described above. The vehicle mounted audio equipment 100 is, like the example shown in Fig. 6, has a device body 100a and a frot panel 100b which is removably attached to the device body 100a. The front panel 100b has an insertion slot 100s through which a smart media S can be inserted so as to be mounted in the front panel 100b. By the mounting of the smart media S, its electrical connection with the circuit shown in Fig. 4 is made.

Also, with a home use audio device, the device may be provided with an interface and a connector terminal for a personal computer, such that the device is directly connected to the personal computer through a cable.

As described above, according to the present invention, the device body is mounted with a rewritable memory such as a flash memory to provide an environment in which previously created image data is captured through the Internet or images created by the user can be uniquely capture, thereby making it possible to provide a display apparatus which can add variations to displayed contents to prevent the user from getting bored, and sufficiently utilize the characteristics inherent to the organic EL display panel. such as its suitability for displaying moving image data.

The features disclosed in the foregoing description, in the claims and/or in the accompanying drawings may, both separately and in any combination thereof, be material for realising the invention in diverse forms thereof.

## Claims

1. A display apparatus for use in an electronic equipment. having a display panel for displaying images, comprising:
a storage part contained in said electronic equipment for storing display data representing display images to be displayed on said display panel; and
a writing part for receiving display data from the outside of said electronic equipment to write into said storage unit as said display data.

2. A display apparatus according to claim 1, wherein said electronic equipment comprises a device body portion, and a display panel portion including a display panel and said storage part.

3. A display apparatus according to claim 1 or claim 2, wherein said storage part is configured to be removable from said electronic equipment.

4. A display apparatus according to claim 1 or claim 2, wherein said storage part comprises a flash memory.

5. A display apparatus according to claim 3, wherein said storage part comprises a flash memory.

6. A display apparatus according to claim 1, wherein said data writing part writes display data accumulated in a predetermined site into said storage part through a communication network.

7. A display apparatus according to claim 6, wherein said communication network is the Internet through which said display data accumulated in said site being downloaded into said storage part.

8. A display apparatus according to claim 1, wherein said data writing unit writes arbitrary display data into said storage part.

9. A display apparatus according to claim 1, wherein said data writing part captures externally existing arbitrary display data and writes the same into said display part.

10. A display apparatus according to claim 8 or claim 9, wherein said arbitrary display data is an image taken by a user using an image shooting device.

11. A display apparatus according to claim 10, wherein:
software for capturing said arbitrary display data and writing the same into said storage part is stored in a predetermined site; and
said data writing part downloads said software through the Internet.

12. A display apparatus according to claim 1, wherein said display data represents a moving image.

13. A display apparatus according to claim 1, wherein said display data represents a still image.

14. A display apparatus according to claim 1, wherein said electronic equipment is a vehicle-mounted electronic equipment.
